(19) Europäisches Patentamt
European Patent Office
Office européen des brevets

(11) **EP 4 389 467 A1**

(12) **EUROPEAN PATENT APPLICATION**
published in accordance with Art. 153(4) EPC

(43) Date of publication:
**26.06.2024 Bulletin 2024/26**

(51) International Patent Classification (IPC):
***B60C 23/04*** (2006.01)

(21) Application number: **22857271.5**

(86) International application number:
**PCT/CN2022/083070**

(22) Date of filing: **25.03.2022**

(87) International publication number:
**WO 2023/019952 (23.02.2023 Gazette 2023/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.08.2021 CN 202110939268**

(71) Applicant: **Baolong Huf Shanghai Electronic Co., Ltd.**
**Shanghai 201619 (CN)**

(72) Inventors:
• **SHI, Weihua**
**Shanghai 201619 (CN)**
• **WANG, Xu**
**Shanghai 201619 (CN)**
• **DENG, Bowen**
**Shanghai 201619 (CN)**

(74) Representative: **Grünecker Patent- und Rechtsanwälte**
**PartG mbB**
**Leopoldstraße 4**
**80802 München (DE)**

(54) **TIRE SELF-POSITIONING SYSTEM AND TIRE SELF-POSITIONING METHOD**

(57) This invention relates to a tire self-positioning system and a positioning method. The tire self-positioning method comprises the steps of: S1, performing data acquisition; S2, performing data transmission; S3, performing data conversion; S4, repeatedly executing steps S1 to S3; S5, performing data statistics; S6, determining, according to a statistical result, position information of a tire corresponding to a first signal. According to the tire self-positioning system and the tire self-positioning method, the accuracy of self-positioning can be improved.

FIG. 1

EP 4 389 467 A1

**Description**

Technical Field

The present invention relates to the technical field of vehicle tire positioning, in particular to a tire self-positioning system and a positioning method thereof.

Background

The tire condition detection system is a safety system that ensures the good operation of the vehicle. As a regulatory requirement, tire condition detection systems have developed rapidly in the automobile market in recent years.

In addition to the need of analyzing the basic functions of the automobile tire pressure monitoring device to detect tire conditions and basic performance of signal transmission, usually in order to accurately monitor the condition of each tire, when pressure or temperature of a certain tire is abnormal, it can correctly display the specific location, for example, front left (FL), front right (FR), rear right (RR), and rear left (RL). After people install the tire condition detection system, they will first determine the installation location of the tire pressure detection device, and this process of identifying the location of the tire condition detection device is usually called "tire condition detection system tire position learning." The tire position learning of the tire condition detection system is further divided into passive learning and active learning, the tire position learning achieved through special diagnostic instruments and other tools is called passive learning; the tire position learning completed by the tire condition detection system using devices that already exist on the vehicle without the need for additional auxiliary equipment is called "tire condition detection system active learning." Compared with passive learning, which requires professional personnel relying on study ID of special diagnostic tools, active learning can save installation time and can complete independent learning of tire positions without the need for after-sales professional personnel and special diagnostic instruments.

Existing active learning solutions generally obtain the wireless signal of the tire condition detection device and the ABS signal of the wheel tooth pulse sensor, analyzing the relationship between the two, and using the known ABS position to identify the position of the tire condition detection device, thus achieving active learning function. Active learning requires obtaining time parameter information from wireless signals. There are many ways to pass time parameters, currently, there are three main methods implemented on the market:

Option 1) Directly coding the time parameter (angle information) into the wireless signal, the disadvantage of this solution is that it requires adding angle information to the original protocol, usually 1 byte, and this solution requires changing the original protocol.

Option 2) Using a small number of bits to identify different time parameters (angle information), the disadvantage of this solution is that angle information is added to the original protocol, usually several bits, and the randomness of the data in this solution is not strong which is easy to increase the probability of frame collision.

Option 3) Using a fixed transmission angle to fixed-point transmission to replace the time parameter (fixed-point transmission is prone to receiving blind spots, resulting in signals that cannot be received, resulting in system failure).

Among the above three options, the first two solutions usually do not support functional upgrades for projects that have been mass-produced but do not have active learning functions; in particular, many OEMs adopt platforms and protocols, including OEM production lines and after-sales markets, which have matching equipment and protocols. If the original protocol is changed in order to add the active learning function, it will cause the EOL equipment of the corresponding production line and the low-frequency matching equipment of the after-sales market to be changed at the same time; for the OEM, it will actually introduce a major change, which results in a lot of additional development costs.

Since the third solution uses fixed-point transmission, active learning can be achieved without changing the original protocol. However, due to the signal strength will be affected by the different tire angles of the tire condition detection system, sometimes the signal strength is too low at certain angle, then the signal cannot be received which causes a signal blind zone.

Summary

In view of the above-mentioned problems of the prior art, the present invention proposes a tire self-positioning system and positioning method thereof, which can improve the success rate of tire self-positioning.

Specifically, the present invention provides a tire self-positioning method, comprising:

S1, data acquisition, obtaining a first signal and a second signal of the tire, the first signal at least comprising acceleration information of the tire, and the second signal at least comprising rotation angle information of the tire;

S2, data transmission, obtaining a wireless signal and a wired signal of the tire, wherein the wireless signal can be indexed to corresponding time when the first signal arrives at a reference point, and the wired signal comprises the second signal and corresponding position information of the tire;

S3, data conversion, comprising:

> S31, calculating index time, the index time being a span from a current time that the wired signal is received to when the first signal arrives at the reference point;
> S32, calculating, according to the index time, reference rotation angle information of the first signal arriving at the reference point, and recording the reference rotation angle information as a reference coded value;

S4, repeatedly executing steps S1-S3 to obtain a sequence of the reference coded value;

S5, data statistics, performing deviation degree statistics on the obtained sequence of the reference coded value;

S6, determining, according to a statistical result, position information of the tire corresponding to the first signal.

In one embodiment of the present invention, the rotation angle information of the tire comprises an ABS teeth number rotated by the tire, obtaining the wired signal in S2, saving the ABS teeth number, and generating a coded value, a plurality of the coded values forming a sequence of the coded value;

in step S5, performing deviation degree statistics on obtained sequence of the reference coded value.

In one embodiment of the present invention, S31 comprises:

> S311, recording a time interval T1 of the currently received wireless signal and wired signal;
> S312, obtaining a backtracking time T2 from the corresponding time when the first signal arrives at the reference point to receiving the wireless signal;
> S313, index time T3 = backtracking time T2 - time interval T1.

In one embodiment of the present invention, in step S32, the reference coded value of the tire at the reference point corresponding to the first signal is calculated according to the index time and timestamp of the coded value, and step S32 comprises:

> S321, timestamp ABSTimeStamp[n] of the coded value corresponding to current wired signal, if ABSTimeStamp[n] - index time T3 $\leq$ ABSTimeStamp[n-m] and ABSTimeStamp[n] - index time T3 $\geq$ ABSTimeStamp[n-m-1], then time ABS ref TimeStamp corresponding to the reference point is between coded value timestamp ABSTimeStamp[n-m-1] and coded value timestamp ABSTimeStamp[n-m], n and m are integer values and n-m-1 $\geq$0;
> S322, calculating the time corresponding to the reference point ABS_ref_TimeStamp = timestamp of the currently received wired signal ABSTimeStamp[n] - index time T3;
> S323, calculating time interval $\Delta T$ between the coded value timestamp ABSTimeStamp[n-m] and time ABS ref TimeStamp corresponding to the reference point = ABSTimeStamp[n-m]-ABS_ref_TimeStamp;
> S324, calculating a difference corresponding to the time interval $\Delta T$: difference$\Delta ABS$ = ($\Delta T$ / (ABSTimeStamp[n-m]-ABSTimeStamp[n-m-1]))*(ABS[n-m] - ABS[n-m-1] );
> S325, calculating reference coded value of the tire corresponding to the reference point ABS_ref = ABS[n-m] - $\Delta ABS$.

In one embodiment of the present invention, step S32 comprises:

> S321', calculating number m of coded values which need to be backward indexed, and number m is the index time T3/the period ABS_period of the second signal rounded;
> S322', according to the number m backward indexed, recording the coded value ABS_search[n-m] indexed in the sequence of the coded value;
> S323', correcting the coded value ABS_search and obtaining reference coded value ABS_ref.

In one embodiment of the present invention, steps S323' comprises:

> S3231', calculating time interval $\Delta T$ between ABS_search and ABS_ref = index time T3/ and take a remainder of the second signal's period ABS_period;
> S3232', calculating difference $\Delta ABS$ between ABS_ref and ABS_search = ($\Delta T$ / ABS_period)*(ABS[n-m] - ABS[n-m-l]);
> S3233', correcting reference coded value at the corresponding reference point and obtaining the reference coded value ABS_ref = ABS[n-m] - $\Delta ABS$.

In one embodiment of the present invention, the backtracking time T2 is a set fixed value, or a specific value calculated by a specific algorithm.

The invention also provides a tire self-positioning system, performing the tire self-positioning method as above, the tire self-positioning system comprises:

a tire;

a tire condition detection device, provided on the tire, configured to collect the first signal and pressure, temperature and identification code of the tire, and generating the wireless signal;

a second signal sensor, provided on the tire and configured to collect the second signal;

a second signal controller, electrically connected to the second signal sensor, the second signal controller receiving the second signal and generating a wired signal, wherein the wired signal includes a coded value corresponding to the second signal and position information of the tire where the second signal sensor is located;

a communication bus and a signal receiving processor, the signal receiving processor receiving the wired signal through the communication bus, the signal receiving processor receiving the wireless signal, the signal receiving processor performing steps S3 to S6 according to the wireless signal and the wired signal.

In one embodiment of the present invention, the signal receiving processor records the time interval T1 of the currently received wireless signal and wired signal;

the signal receiving processor obtains the backtracking time T2 from the corresponding time when the first signal arriving at the reference point to receiving the wireless signal;

the signal receiving processor calculates index time T3=backtracking time T2-time interval T1.

In one embodiment of the present invention, the wireless signal includes the backtracking time T2.

In one embodiment of the present invention, the backtracking time T2 is calculated by the tire condition detection device and the signal receiving processor through the same specific algorithm to obtain a specific value.

In one embodiment of the present invention, the specific value is calculated based on the pressure, temperature or identification number of the tire.

This invention provides a tire self-positioning system and positioning method thereof, which realizes an active learning method without increasing the customer's original protocol and improving the success rate of tire self-positioning.

It is to be understood that both the foregoing general description and the following detailed description of the invention are exemplary and explanatory and are intended to provide further explanation of the invention as claimed.

Brief Description of the Drawings

The drawings are included to provide a further understanding of the present application, and they are included and constitute a part of the present application, the drawings show the embodiments of the present application, and serving to explain the principles of the present application together with the description. In the drawings:

Fig.1 shows a flow chart of a tire self-positioning method according to an embodiment of the present invention.

Fig. 2 shows a flow chart of step S31 in a tire self-positioning method according to an embodiment of the present invention.

Fig.3 shows a schematic structural view of a tire self-positioning system according to an embodiment of the present invention.

Fig. 4 shows a schematic view of the ABS teeth number according to an embodiment of the present invention.

Fig. 5 shows characteristic curves of the first signal and the second signal according to an embodiment of the present invention.

Fig. 6 shows a characteristic curve view of ABS coding and ABS variables according to an embodiment of the present invention.

Fig. 7 shows a characteristic curve of the acceleration of the first signal and the ABS teeth number of the second signal according to an embodiment of the present invention.

Fig.8 shows a schematic view of calculating a reference coded value according to an embodiment of the present invention.

Fig.9 shows a schematic view of calculating a reference coded value according to another embodiment of the present invention.

Preferred Embodiment of the Present Invention

It should be noted that, as long as there is no conflict, the embodiments and features in the embodiments of this application can be combined with each other.

The technical solutions in the embodiments of the present application will be clearly and completely described below in conjunction with the drawings in the embodiments of the present application. Obviously, the described embodiments are parts of the embodiments of this application, but not all of them. Based on the embodiments in the present application, all other embodiments obtained by persons of ordinary skill in the art without making creative efforts belong to the protection scope of the present application.

It should be noted that the terms used herein are only for describing specific embodiments and are not intended to limit the exemplary embodiments according to the present application. As indicated in this application and claims, the terms "a", "an", "a kind of" and/or "the" do not specifically refer to the singular and may include the plural unless the context clearly indicates an exception. Generally speaking, the terms "comprising" and "including" only suggest the inclusion of clearly identified steps and elements, and these steps and elements do not constitute an exclusive list, and the method or device may also contain other steps or elements.

In the description of the present application, it should be understood that orientation words such as "front, back, up, down, left, right", " landscape, portrait, vertical, horizontal" and "top, bottom" etc. indicating the orientation or positional relationship is generally based on the orientation or positional relationship shown in the drawings, only for the convenience of describing the application and simplifying the description, in the absence of a contrary statement, these orientation words do not indicate or imply that the device or element referred to must have a specific orientation or be constructed and operated in a specific orientation, and therefore cannot be construed as limiting the scope of protection of this application; the orientation words "inside and outside" refer to inside and outside relative to the outline of each part itself.

For the convenience of description, spatially relative terms may be used here, such as "on ...", "over ...", "on the upper surface of ...", "above", etc., to describe the spatial positional relationship between one device or feature and other devices or features. It will be understood that, in addition to the orientation depicted in the drawings, the spatially relative terms are intended to encompass different orientations of the device in use or operation. For example, if the device in the drawings is turned over, devices described as "on other devices or configurations " or "above other devices or configurations" would then be oriented "beneath other devices or configurations" or "under other devices or configurations ". Thus, the exemplary term "above" can encompass both an orientation of "above" and "beneath". The device may be otherwise oriented (rotated 90 degrees or at other orientations), and making a corresponding explanation for the space relative description used here.

In addition, it should be noted that the use of words such as "first" and "second" to define components is only for the convenience of distinguishing corresponding components, unless otherwise stated, the above words have no special meanings, and therefore cannot be construed as limiting the protection scope of the present application. In addition, although the terms used in this application are selected from well-known and commonly used terms, some terms mentioned in the specification of this application may be selected by the applicant according to his or her judgment, and their detailed meanings are listed in this article described in the relevant section of the description. Furthermore, it is required that this application be understood not only by the actual terms used, but also by the meaning implied by each term.

First, the design idea of a tire self-positioning method provided by the present invention is briefly explained. Generally, taking a small car as an example, it contains four tires, front left (FL), front right (FR), rear right (RR), and rear left (RL). After installing the tire condition detection system on each tire, it is necessary to determine the installation location of the tire pressure detection device. During tire driving process, a wireless signal and a wired signal are acquired at the same reference point (same rotation angle) in any rotation cycle. The wireless signal is associated with a reference point of the acceleration signal, and the wired signal includes the ABS signal of the tire's teeth pulse sensor and the known tire position (eg FL) where the teeth pulse sensor is located. The actual teeth number information corresponding to the reference point is calculated based on the wired signal and wireless signal, and a sequence of teeth number information is generated. For example, the wireless signal of a tire and the wired signal of the front left tire (FL), the wired signal of the front right tire (FR), the wired signal of the rear right tire (RR), and the wired signal of the rear right tire (RR) can form a sequence of four sets of teeth number information. According to data statistics, the group of teeth number information with the smallest deviation, assuming that the wired signal of the front left tire (FL) has the smallest deviation, then the corresponding tire condition detection system is determined to be installed on the front left (FL). By analogy, the actual location of each tire condition detection system can be confirmed, thereby realizing active learning of the tire position of the tire condition detection system.

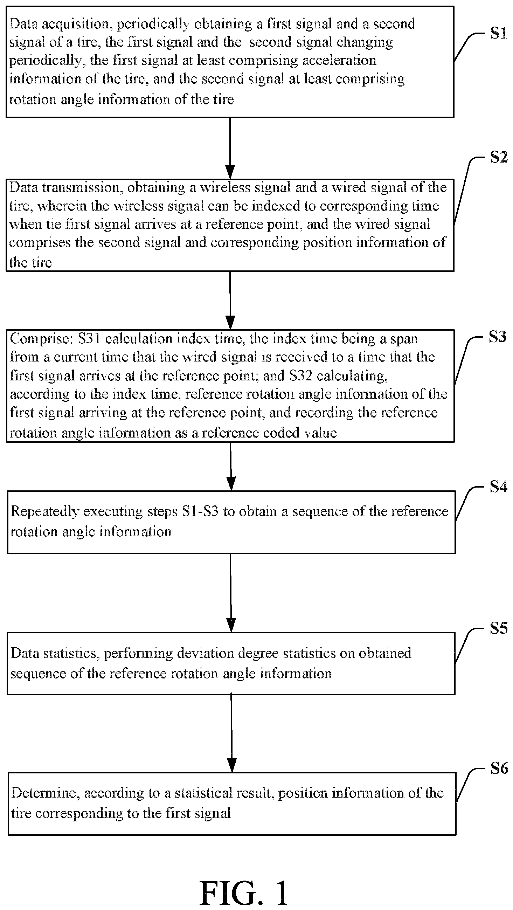

Fig.1 shows a flow chart of a tire self-positioning method according to an embodiment of the present invention. As shown in Fig. 1, a tire self-positioning method provided by the present invention comprises the steps:

S1, data acquisition, obtaining a first signal and a second signal of the tire, the first signal at least comprising acceleration information of the tire, and the second signal at least comprising rotation angle information of the tire;
S2, data transmission, obtaining a wireless signal and a wired signal of the tire, wherein the wireless signal can be indexed to corresponding time when the first signal arrives at a reference point, and the wired signal comprises the second signal and corresponding position information of the tire;

S3, data conversion, comprising:

S31, calculating index time, the index time being a span from a current time that the wired signal is received to a time that the first signal arrives at the reference point;

S32, calculating, according to the index time, reference rotation angle information of the first signal arriving at the reference point, and recording the reference rotation angle information as a reference coded value;

S4, repeatedly executing steps S1-S3 to obtain a sequence of the reference coded value;

S5, data statistics, performing deviation degree statistics on obtained sequence of the reference coded value;

S6, determining, according to a statistical result, position information of the tire corresponding to the first signal.

Preferably, the rotation angle information of the tire comprises an ABS teeth number rotated by the tire, obtaining the wired signal in S2, saving the ABS teeth number, and generating a coded value, a plurality of the coded values forming a sequence of the coded value;

in step S5, performing deviation degree statistics on the obtained sequence of the reference coded value, the method of deviation degree statistics is anyone of variance, standard deviation and mean square error.

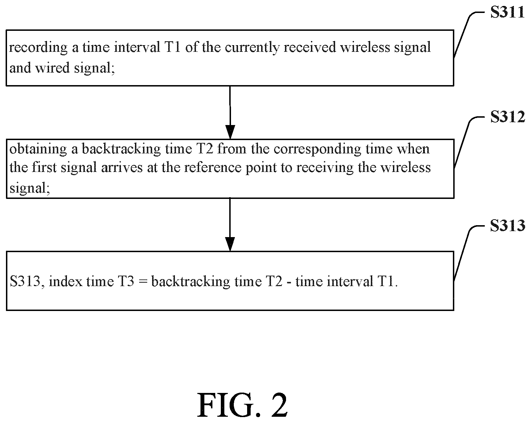

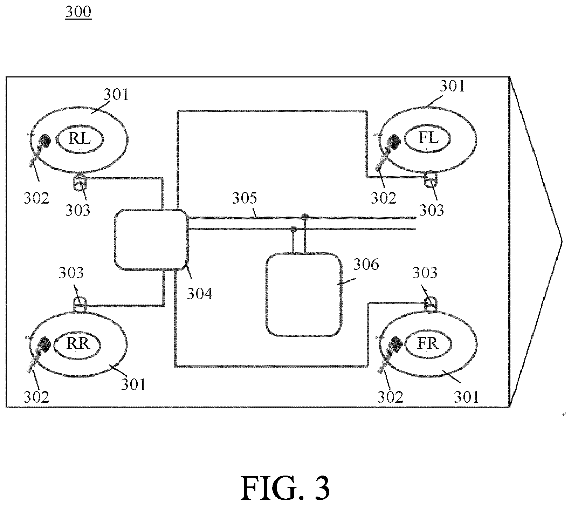

Fig. 2 shows a flow chart of step S31 in the tire self-positioning method according to an embodiment of the present invention. Preferably, referring to Fig. 3, step S31 further comprises:

S311, recording a time interval T1 of the currently received wireless signal and wired signal;

S312, obtaining a backtracking time T2 from the corresponding time when the first signal arrives at the reference point to receiving the wireless signal;

S313, index time T3 = backtracking time T2 - time interval T1.

Preferably, in step S32, the reference coded value of the tire at the reference point corresponding to the first signal is calculated according to the index time and timestamp of the coded value, step S32 comprises:

S321, the timestamp ABSTimeStamp[n] of the coded value corresponding to the current wired signal, if ABSTimeStamp[n] - index time T3 $\leq$ ABSTimeStamp[n-m] and ABSTimeStamp[n] - index time T3 $\geq$ ABSTimeStamp[n-m-1], then the time ABS ref TimeStamp corresponding to the reference point is between the coded value timestamp ABSTimeStamp[n-m-1] and the coded value timestamp ABSTimeStamp[n-m], n and m are integer values and n-m-1 $\geq$0;

S322, calculating the time corresponding to the reference point ABS_ref_TimeStamp = the timestamp of the currently received wired signal ABSTimeStamp[n] - index time T3;

S323, calculating the time interval $\Delta$T between the coded value timestamp ABSTimeStamp[n-m] and the time ABS ref TimeStamp corresponding to the reference point = ABSTimeStamp[n-m]-ABS_ref_TimeStamp;

S324, calculating the difference corresponding to the time interval $\Delta$T: difference$\Delta$ABS = ($\Delta$T / (ABSTimeStamp[n-m]- ABSTimeStamp[n-m-1]))*(ABS[n-m] - ABS[n-m-1] );

S325, calculating the reference coded value of the tire corresponding to the reference point ABS_ref = ABS[n-m] - $\Delta$ABS.

Optionally, step S32 comprises:

S321', calculating the number m of coded values which need to be backward indexed, and the number m is the index time T3/the period ABS_period of the second signal rounded;

S322', according to the number m backward indexed, recording the coded value ABS_search[n-m] indexed in the sequence of the coded value;

S323', correcting the coded value ABS_search and obtaining the reference coded value ABS_ref.

Preferably, steps S323' comprises:

S3231', calculating the time interval $\Delta$T between ABS_search and ABS ref = index time T3/ and take the remainder of the second signal's period ABS_period;

S3232', calculating the difference $\Delta$ABS between ABS_ref_and ABS_search = ($\Delta$T / ABS_period)*(ABS[n-m] - ABS[n-m-1]);

S3233', correcting the reference coded value at the corresponding reference point and obtaining the reference coded value ABS_ref = ABS[n-m] - $\Delta$ABS.

Preferably, the backtracking time T2 is a set fixed value, or a specific value calculated by a specific algorithm.

Preferably, the characteristic curve of the first signal is a sinusoidal curve, and a set value of the sinusoidal curve of the first signal is selected as a reference point for backtracking coded value. According to the backtracking time T2 of the currently received wireless signal, taking the current second signal as the starting point, the reference code value corresponding to the reference point position at the reference point time is traced back. It should be noted that although any angle of the first signal selected by the reference point can be used as the set value, for example, according to the characteristics of the first signal, the set value can be the highest point of the tire in each cycle, or the position where the tire contacts the ground, or any other angular position. Preferably, the maximum value of the characteristic curve of the first signal is used as the reference point for backtracking coded value.

Fig.3 shows a schematic structural view of a tire self-positioning system according to an embodiment of the present invention. As shown in the figure, the present invention also provides a tire self-positioning system, performing the tire self-positioning method above. The tire self-positioning system 300 comprises: tire 301, tire condition detection device 302, second signal sensor 303, second signal controller 304, communication bus 305 and signal receiving processor 306.

Wherein, the tire condition detection device 302 and the second signal sensor 303 are provided on the tire 301. The tire condition detection device 302 is configured to collect the first signal and pressure, temperature and identification code of the tire 301, and to generate the wireless signal;
Second signal sensor is configured to collect ABS teeth number rotated by the tire 301.

Second signal controller 304 is electrically connected to the second signal sensor 303. The second signal controller 304 receives the second signal and generates a wired signal, the wired signal includes a coded value corresponding to the second signal and the position information of the tire 301 where the second signal sensor 303 is located.

The signal receiving processor 306 receives the wired signal through the communication bus 305. The signal receiving processor 306 receives the wireless signal at the same time. The signal receiving processor 306 performs steps S3 to S6 according to the received wireless signal and the wired signal, finally determining the specific position of tire 301. In an embodiment, communication bus 305 may be a CAN communication bus.

Preferably, the tire condition detection device 302 comprises a first signal collection sensor and a wireless transmission circuit, the first signal collection sensor is configured to collect the first signal, and the first signal is sent to the signal receiving processor 306 through the wireless transmission circuit. Generally, the tire condition detection device 302 is installed in the tire. The tire condition detection device 302 also includes a tire air pressure sensor and so on. The tire condition detection device 302 can collect the tire pressure value and the first signal of the tire at the same time, and can also process and collect the tire condition information through the micro control unit integrated on the chip; and it cooperates with the wireless transmitting circuit to collect the tire pressure and other related information and sent via wireless signals.

Preferably, the first signal collection sensor is an acceleration sensor, which is used to collect acceleration information of the tire 301. The second signal sensor 303 is an ABS teeth pulse sensor of the anti-lock braking system. As the tire 301 rotates, the first signal shows sinusoidal characteristics. Conventionally, a vehicle has multiple tires 301, in this embodiment, the vehicle has four tires 301, which are front left tire (FL), front right tire (FR), rear right tire (RR), and rear left tire (RL). Each tire is provided with a tire condition detection device 302, and each tire condition detection device 302 has a unique identification code, which is called the ID of the tire condition detection device 302. The wireless signals sent by the tire condition detection device 302 include temperature, pressure, etc. The tire condition detection device 302 can detect the first signal and determine the position of the reference point according to the characteristics of the first signal. Further, when the tire 301 is rolling, the gears of the anti-lock braking system will roll along with the tire 301, and the ABS teeth pulse sensor will collect the ABS teeth number that have been rotated, and send out the ABS teeth number information. The second signal controller 304 encodes the ABS teeth number information to form a coded value.

Preferably, the signal receiving processor 306 records the time interval T1 of the currently received wireless signal and wired signal;

the signal receiving processor 306 obtains the backtracking time T2 from the corresponding time of the first signal arriving at the reference point to receiving the wireless signal;
the signal receiving processor 306 calculates index time T3=backtracking time T2-time interval T1.

The signal receiving processor 306 calculates the reference coded value ABS _ref corresponding to the tire at which the first signal arrives at the reference point based on the index time T3 and the timestamp of the coded value.

Preferably, the wireless signal includes the backtracking time T2. The tire condition detection device 302 can estimate the generation time of the wireless signal and the time which is from sending to receiving the wireless signal to form a certain value, which is included in the wireless signal.

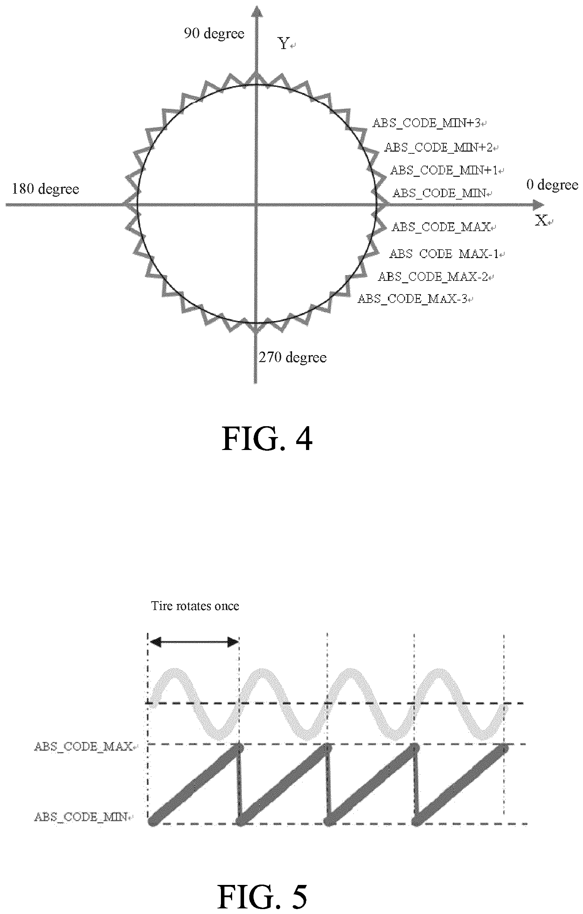

Figure 4 shows a schematic view of the ABS teeth number according to an embodiment of the present invention.

As shown in the figure, taking the positive X-axis as the starting point, it is recorded as the minimum code ABS_CODE_MIN, counterclockwise, the code increases by 1 tooth for every tooth rotation of the tire until the code reaches the maximum value ABS_CODE_MAX after the tire rotates for one cycle, and then the code starts from the minimum code again. In this embodiment, the number of gear teeth is 48, that is, ABS_CODE_MIN=0; ABS_CODE_MAX=47, tire 301 rotates each tooth to generate a pulse, therefore, the tire 301 generates 48 pulses when it rotates one cycle, and 96 pulses when it rotates two cycles. Since the tire condition detection device 302 at the same position of the tire condition and the gear roll with the tire, and because they are coaxial, the characteristic curves of the first signal and the second signal of the same tire 301 are always synchronized. Fig. 5 shows characteristic curves of the first signal and the second signal according to an embodiment of the present invention. As shown in the figure, the characteristic curve of the first signal (acceleration signal) is at the top, and the characteristic curve of the second signal (ABS teeth coded signal) is at the bottom.

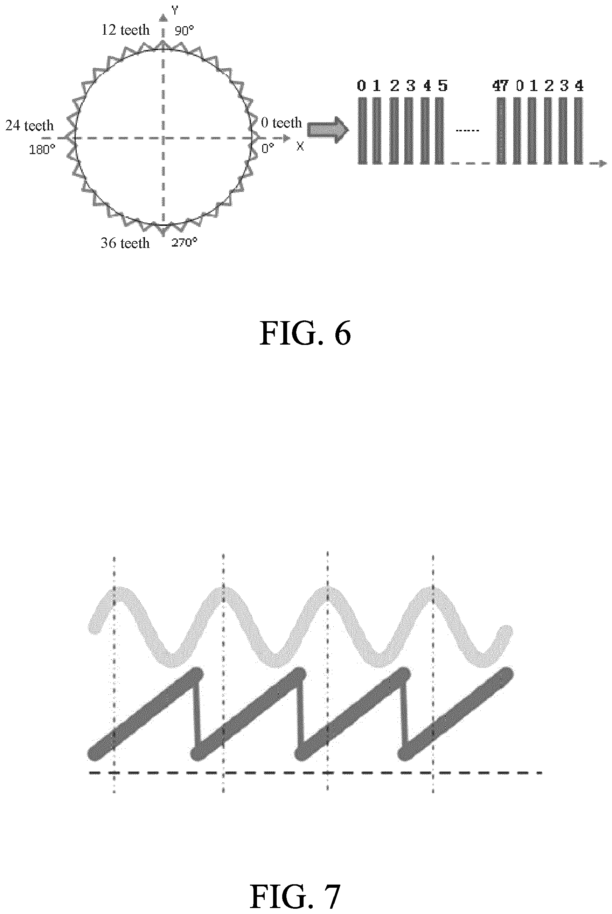

The second signal controller 304 receives the ABS teeth number data output by the second signal sensor 303, and stores the ABS teeth number data in an accumulated form into an internal variable; after the internal variable is accumulated to the maximum value ABS_MAX of the ABS variable, it will restarts counting from the minimum value ABS_MIN of the ABS variable. The second signal controller 304 processes the ABS variables into a data format that complies with the bus protocol, and roughly and periodically sending them to the bus. Fig. 6 shows a characteristic curve of ABS coded values and ABS variables according to an embodiment of the present invention. The corresponding relationship between ABS coded value and ABS variable is: ABS coded value = (ABS variable)/ ABS_CODE_MAX. For example: the value range of the ABS coded value can be 0-47; the value range of the ABS variable can be 0-47.

The signal receiving processor 306 is provided on the vehicle body side and is configured to receive wireless signals from each tire condition detection device 302 at any random time. The signal receiving processor 306 receives the wired signal from the second signal controller 304 through the communication bus 305. The wired signal is generally periodic, and in this embodiment it includes wired signals at four positions: FL, FR, RR, and RL.

Preferably, the backtracking time T2 is calculated by the tire condition detection device 302 and the signal receiving processor 306 through the same specific algorithm to obtain a specific value. Selecting any angle of the first signal as a reference point for data conversion, and there is a backtracking time T2 between the sending time and the receiving time of the wireless signal. The backtracking time T2 can be generated by a specific algorithm, that is, the agreed backtracking time. The same algorithm is executed on the tire condition detection device 302 and the signal receiving processor 306 side, and finally a synchronized backtracking time T2 is obtained on the tire condition detection device 302 side and the signal receiving processor 306 side. Preferably, the specific value is calculated based on the tire's pressure, temperature or identification code. For example, the wireless signal contains tire pressure information including pressure P, temperature T and the ID of the tire condition detection device, the backtracking time T2 = sum(P+T+ID0+ID1+ID2+ID3), forming an agreed backtracking time.

After the index starting point and the corresponding backtracking time T2 are clarified, the coded value of the second signal corresponding to the time when the first signal of the tire condition detection device 302 arrives at the reference point can be indexed, and the ABS teeth number corresponding to the tire rotation angle in the reference point time can be calculated based on the coded value, forming the reference coded value. Selecting reference point of the acceleration characteristic curve of the tire condition detection device 302 at the same rotation angle, then the reference coded value formed by the corresponding ABS teeth number will have a convergent distribution at the reference point, and the degree of deviation will be small.

Fig. 7 shows a characteristic curve of the acceleration of the first signal and the ABS teeth number of the second signal according to one embodiment of the present invention. As shown in the figure, since the tire condition detection device 302 and the tire 301 at the same position are of the coaxial gear teeth are coaxial, the first signal characteristic curve from the tire condition detection device 302 on the top of the figure and the second signal characteristic curve at the bottom are presented synchronized patterns. Using this characteristic, if the reference point is selected to be at the same angle of the first signal characteristic curve, the corresponding coaxial second signal coded values will converge at a specific value. Since the second signal passing through the communication bus 305 contains ABS teeth number information, the known position of the second signal and the synchronized relationship between the first signal characteristic curve and the second signal characteristic curve can thus be used to realize the position identification of the tire condition detection device 302. The reference point in the figure is selected from the highest point of the tire in each cycle.

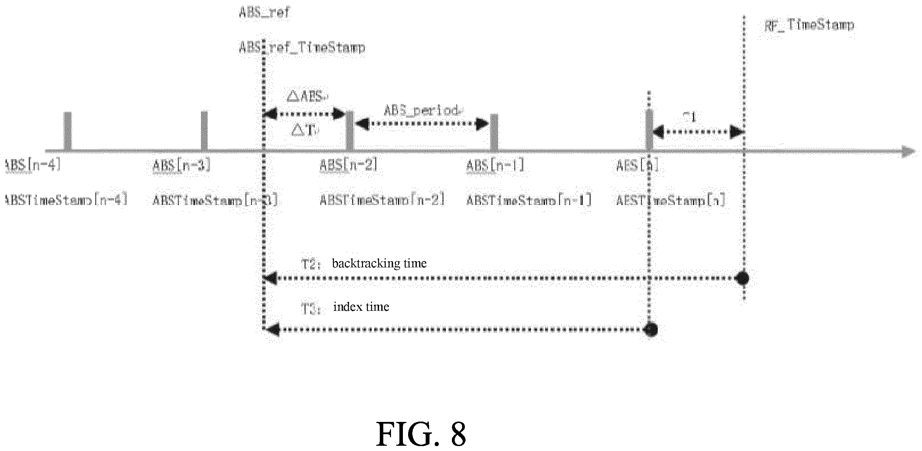

Fig.8 shows a schematic view of calculating a reference coded value according to an embodiment of the present invention. As shown in the figure, RF_Timestamp is the time when the current wireless signal is received by the signal receiving processor 306, and ABS_ref_is the reference coded value when the first signal arrives at the reference point. T2 is the backtracking time, which refers to the time interval between the currently received wireless signal Receive_RF and the first signal arriving at the reference point; the backtracking time T2 is obtained by an algorithm, the algorithm can be determined by the tire condition detection device 302 and the signal receiving processor 306 together, by way of both parties implementing the same algorithm. Currently receiving a wired signal, saving teeth number information, that is, the coded value ABS[n] is used as the starting point, indexed back, and the reference coded value at which the first signal arrives at the reference point is calculated, recorded as the reference coded value ABS_Ref. The calculation of the reference coded value is explained in detail with reference to Fig. 2.

Data conversion is achieved by following the steps below, steps S31 comprises:

S311, recording a time interval T1 of the currently received wireless signal and wired signal;

S312, obtaining a backtracking time T2 from the corresponding time when the first signal arrives at the reference point to receiving the wireless signal;

S313, index time T3 = backtracking time T2 - time interval T1.

In step S32, the reference coded value of the tire at the reference point corresponding to the first signal is calculated according to the index time and timestamp of the coded value, step S32 comprises:

S321, the timestamp ABSTimeStamp[n] of the coded value corresponding to the current wired signal, if ABSTimeStamp[n] - index time T3 $\leq$ ABSTimeStamp[n-m] and ABSTimeStamp[n] - index time T3 $\geq$ ABSTimeStamp[n-m-1], then the time ABS ref TimeStamp corresponding to the reference point is between the coded value timestamp ABSTimeStamp[n-m-1] and the coded value timestamp ABSTimeStamp[n-m], n and m are integer values and n-m-1 $\geq$0. In this embodiment, m=2, and the time ABS_ref_TimeStamp corresponding to the reference point falls between the coded value timestamp ABSTimeStamp[n-3] and the coded value timestamp ABSTimeStamp[n-2].

S322, calculating the time corresponding to the reference point ABS_ref_TimeStamp = the timestamp of the currently received wired signal ABSTimeStamp[n] - index time T3;

S323, calculating the time interval $\Delta T$ between the coded value timestamp ABSTimeStamp[n-2] and the time ABS ref TimeStamp corresponding to the reference point = ABSTimeStamp[n-2]-ABS_ref_TimeStamp;

S324, calculating the difference corresponding to the time interval $\Delta T$: difference$\Delta$ABS = ($\Delta T$ / (ABSTimeStamp[n-2]- ABSTimeStamp[n-2-1]))*(ABS[n-2] - ABS[n-3] );

S325, calculating the reference coded value of the tire corresponding to the reference point ABS_ref = ABS[n-2] - $\Delta$ABS.

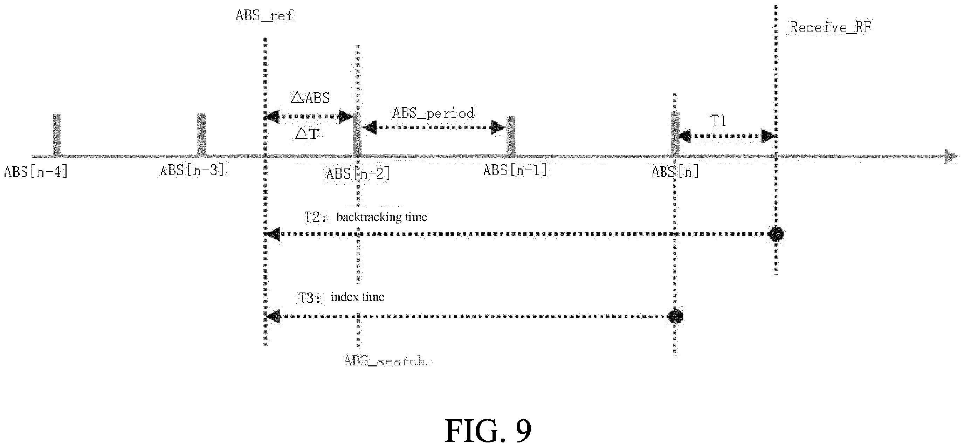

Fig.9 shows a schematic view of calculating a reference coded value according to another embodiment of the present invention. As an optional solution, in step S32, the number of coded values that need to be indexed back can also be calculated based on the indexing time, that is, using the coded value ABS[n] as the starting point, indexing back, the coded value indexed in the sequence of coding values is recorded according to the number of backward indexes, and the coded value is modified to obtain the reference coded value.

Step S32 comprises:

S321', calculating the number m of coded values that need to be backward indexed, wherein the number m is the index time T3/the period ABS_period of the second signal rounded, calculating the subscript value of the indexed sequence of the coded value;

S322', according to the number of backward indexes m, recording the coded value ABS_search[n-m] indexed in the sequence of coded values. In this embodiment, the coded value of the second signal is ABS_search = ABS[n-2].

S323', correcting the coded value ABS _search and obtaining the reference coded value ABS_ref.

Specifically, step S323' comprises:

S3231', calculating the time interval $\Delta T$ between ABS_search and ABS_ref = index time T3/ and take the remainder of the second signal's period ABS_period;

S3232', calculating the difference $\Delta$ABS between ABS _ref and ABS_search (the difference in the number of ABS teeth between the two): $\Delta$ABS = ($\Delta T$ / ABS_period)*(ABS[n-2] - ABS[n-3]), wherein ABS[n-2] is the indexed coded value ABS_search.

S3233', correcting the reference coded value at the corresponding reference point and obtaining the reference coded value ABS_ref = ABS[n-2] - $\Delta$ABS.

Each time the signal receiving processor 306 receives a wireless signal from a tire condition detection device 302, it executes the above steps once to obtain a sequence of reference coded values ABS_ref_accumulated by each tire condition detection device 302. Taking four tire condition detection devices 302 installed on four tires as an example, each tire corresponds to four sets of reference coded value ABS _ref data. The degree of data deviation is analyzed for the four sets of reference coded values ABS_ref_corresponding to each tire.

Taking the tire condition detection device ID0 as an example, its corresponding ABS_ref converges at the RR position, so the tire condition detection device ID0 is positioned at the rear right position, referring to the table below.

|  | First signal number | ABS_ref (FL) | ABS_ref (FR) | ABS_ref (RR) | ABS_ref (RL) |
|---|---|---|---|---|---|
| tire condition detection device ID0 | No.1 packet | 23 | 43 | 31 | 34 |
|  | No.2 packet | 45 | 3 | 30 | 2 |
|  | No.3 packet | 12 | 12 | 29 | 23 |
|  | No.n packet | 6 | 24 | 32 | 9 |
| tire condition detection device ID1 | No.1 packet | 4 | 21 | 43 | 23 |
|  | No.2 packet | 6 | 1 | 3 | 4 |
|  | No.3 packet | 6 | 34 | 12 | 9 |
|  | No.n packet | 4 | 7 | 23 | 14 |
| tire condition detection device ID2 | No.1 packet | 23 | 10 | 23 | 43 |
|  | No.2 packet | 5 | 10 | 35 | 3 |
|  | No.3 packet | 12 | 12 | 12 | 12 |
|  | No.n packet | 36 | 12 | 6 | 24 |
| tire condition detection device ID3 | No.1 packet | 43 | 23 | 43 | 47 |
|  | No.2 packet | 3 | 5 | 15 | 47 |
|  | No.3 packet | 9 | 11 | 2 | 1 |
|  | No.n packet | 23 | 14 | 26 | 1 |

The deviation calculation method includes using variance to calculate the deviation.

$$S^2 = \sum (X - \bar{x})^2 / (n-1);$$

or

$$S^2 = \sum (X - \bar{x})^2 / (n);$$

Wherein, $S^2$ is the overall variance, X is the teeth value each time, x is the overall mean, and n is the overall number of cases.

The ABS corresponding to the tire condition detection device ID0 converges to the sets of data 31, 30, 29, and 32, the variance value of the ABS calculated according to the above formula is approximately 1; among the four sets of data FL/FR/RR/RL corresponding to ID0, the variance of RR is the smallest and the deviation of the data is small. It can be concluded that the tire condition detection device ID0 is positioned to the rear right position (RR).

The ABS corresponding to the tire condition detection device ID1 converges on the groups of data 4, 6, 6, and 4, the variance value of the ABS calculated according to the above formula is approximately 1; among the four sets of data FL/FR/RR/RL corresponding to ID1, the variance of FL is the smallest and the deviation of the data is small. It can be concluded that the tire condition detection device ID1 is positioned to the front left position (FL).

The ABS corresponding to the tire condition detection device ID2 converges on the groups of data 10, 10, 12, and 12, the variance value of the ABS calculated according to the above formula is approximately 1; among the four sets of data FL/FR/RR/RL corresponding to ID2, the variance of FR is the smallest and the deviation of the data is small. It can be concluded that the tire condition detection device ID2 is positioned to the front right position (FR).

The ABS corresponding to the tire condition detection device ID3 converges on the groups of data 47, 47, 45, and 45, the variance value of the ABS calculated according to the above formula is approximately 1; among the four sets of data FL/FR/RR/RL corresponding to ID3, the variance of RL is the smallest and the deviation of the data is small. It can be concluded that the tire condition detection device ID3 is positioned to the rear left position (RL).

| tire condition detection device ID0 | | | |
|---|---|---|---|
| FL | FR | RR | RL |
| 6 | 43 | **21** | 42 |
| 20 | 3 | **20** | 12 |
| 6 | 12 | **24** | 34 |
| 20 | 24 | **22** | 2 |
| 6 | 4 | **23** | 23 |
| 20 | 12 | **19** | 9 |
| 6 | 42 | **20** | 4 |
| 20 | 31 | **21** | 32 |

| tire condition detection device ID1 | | | |
|---|---|---|---|
| FL | FR | RR | RL |
| **4** | 21 | 43 | 23 |
| **5** | 1 | 3 | 4 |
| **3** | 34 | 12 | 9 |
| **7** | 7 | 23 | 14 |
| **7** | 4 | 37 | 23 |
| **5** | 12 | 32 | 9 |
| **8** | 42 | 5 | 4 |
| **2** | 31 | 21 | 32 |

| tire condition detection device ID2 | | | |
|---|---|---|---|
| FL | FR | RR | RL |
| 23 | **20** | 23 | 43 |
| 5 | **20** | 35 | 3 |
| 12 | **22** | 12 | 12 |
| 36 | **25** | 6 | 24 |
| 24 | **23** | 43 | 8 |
| 8 | **21** | 12 | 35 |
| 16 | **19** | 21 | 31 |
| 42 | **23** | 6 | 27 |

| tire condition detection device ID3 | | | |
|---|---|---|---|
| FL | FR | RR | RL |
| 43 | 23 | 43 | **47** |
| 3 | 5 | 15 | **46** |

(continued)

| tire condition detection device ID3 | | | |
|---|---|---|---|
| FL | FR | RR | RL |
| 9 | 11 | 2 | **45** |
| 7 | 43 | 26 | **45** |
| 46 | 11 | 4 | **45** |
| 24 | 32 | 26 | **46** |
| 21 | 14 | 35 | **45** |
| 9 | 46 | 21 | **46** |

Each time the signal receiving processor 306 receives a wireless signal from a tire condition detection device 302, it performs an action of backtracking the second signal coded value and calculating the reference coded value, so that the corresponding reference coded value ABS_ref_of each tire condition detection device 302 (ID0~ID4) can be obtained; performing variance statistics on the 4 sets of reference coded values ABS _ref corresponding to each tire condition detection device 302 to obtain the deviation degree of each set of data. The following is another set of complete test data statistical results, in which the ABS teeth number of the tire is 48 (the number of tooth pulses increased during one rotation of the tire), the teeth number of the tire condition detection device ID3 is reversed, and it can be seen from the variance results.

The rear right wheel (RR) ABS variance value corresponding to the tire condition detection device ID0 is the smallest, so the tire condition detection device ID0 is assigned to the rear right position.

The front left wheel (FL) ABS variance value corresponding to the tire condition detection device ID1 is the smallest, so the tire condition detection device ID1 is assigned to the front left position.

The front right wheel (FR) ABS variance value corresponding to the tire condition detection device ID2 is the smallest, so the tire condition detection device ID2 is assigned to the front right position.

The rear left wheel (RL) ABS variance value corresponding to the tire condition detection device ID3 is the smallest, so the tire condition detection device ID3 is assigned to the rear left position.

Preferably, in order to save power consumption, the tire condition detection device 302 will calculate the reference point of the first signal only in the learning mode; in the learning mode, the tire condition detection device sends a total of 40 packets of wireless signals, and each packet of wireless signals includes 3 frames of data, each frame of data can be indexed to the position of the reference point. The random packet interval between packets is 15s$\pm$ (50~200ms), the frame interval in each packet is a fixed frame interval (for example: 70ms). Using a random packet interval mechanism, the location where the wireless signal is sent is randomly changed, which can increase the probability of the wireless signal being received.

The invention provides a tire self-positioning system and positioning method thereof, which can obtain the backtracking time of the first signal through various methods to facilitate the calculation of the reference coded value; it facilitates the implementation of active learning methods without the need to increase the customer's original protocol, it can also improve the positioning success rate.

It will be apparent to those skilled in the art that various modifications and variations can be made to the above-mentioned exemplary embodiments of the present invention without departing from the spirit and scope of the present invention. Therefore, it is intended that the present invention cover the modifications and variations of this invention provided within the scope of the appended claims and their equivalents.

**Claims**

1. A tire self-positioning method, comprising:

   S1, data acquisition, obtaining a first signal and a second signal of the tire, the first signal at least comprising acceleration information of the tire, and the second signal at least comprising rotation angle information of the tire;
   S2, data transmission, obtaining a wireless signal and a wired signal of the tire, wherein the wireless signal can be indexed to corresponding time when the first signal arrives at a reference point, and the wired signal comprises the second signal and corresponding position information of the tire;
   S3, data conversion, comprising:

S31, calculating index time, the index time being a span from a current time that the wired signal is received to when the first signal arrives at the reference point;

S32, calculating, according to the index time, reference rotation angle information of the first signal arriving at the reference point, and recording the reference rotation angle information as a reference coded value;

S4, repeatedly executing steps S1-S3 to obtain a sequence of the reference coded value;

S5, data statistics, performing deviation degree statistics on the obtained sequence of the reference coded value;

S6, determining, according to a statistical result, position information of the tire corresponding to the first signal.

2. The tire self-positioning method according to claim 1, **characterized in that**, the rotation angle information of the tire comprises an ABS teeth number rotated by the tire, obtaining the wired signal in S2, saving the ABS teeth number, and generating a coded value, a plurality of the coded values forming a sequence of the coded value;

in step S5, performing deviation degree statistics on obtained sequence of the reference coded value.

3. The tire self-positioning method according to claim 2, **characterized in that**, S31 comprises:

S311, recording a time interval T1 of the currently received wireless signal and wired signal;

S312, obtaining a backtracking time T2 from the corresponding time when the first signal arrives at the reference point to receiving the wireless signal;

S313, index time T3 = backtracking time T2 - time interval T1.

4. The tire self-positioning method according to claim 3, **characterized in that**, in step S32, the reference coded value of the tire at the reference point corresponding to the first signal is calculated according to the index time and timestamp of the coded value, and step S32 comprises:

S321, timestamp ABSTimeStamp[n] of the coded value corresponding to current wired signal, if ABSTimeStamp[n]-index time $T3 \leq$ ABSTimeStamp[n-m] and ABSTimeStamp[n]-index time $T3 \geq$ ABSTimeStamp[n-m-1], then time ABS ref TimeStamp corresponding to the reference point is between coded value timestamp ABSTimeStamp[n-m-1] and coded value timestamp ABSTimeStamp[n-m], n and m are integer values and n-m-1 $\geq 0$;

S322, calculating the time corresponding to the reference point ABS_ref_TimeStamp = timestamp of the currently received wired signal ABSTimeStamp[n] - index time T3;

S323, calculating time interval $\Delta T$ between the coded value timestamp ABSTimeStamp[n-m] and time ABS ref TimeStamp corresponding to the reference point = ABSTimeStamp[n-m]-ABS_ref_TimeStamp;

S324, calculating a difference corresponding to the time interval $\Delta T$: difference$\Delta ABS = (\Delta T / (\text{ABSTimeStamp}[n-m]- \text{ABSTimeStamp}[n-m-1]))*(ABS[n-m] - ABS[n-m-1] )$;

S325, calculating reference coded value of the tire corresponding to the reference point ABS_ref = ABS[n-m] - $\Delta ABS$.

5. The tire self-positioning method according to claim 3, **characterized in that**, step S32 comprises:

S321', calculating number m of coded values which need to be backward indexed, and number m is the index time T3/the period ABS_period of the second signal rounded;

S322', according to the number m backward indexed, recording the coded value ABS_search[n-m] indexed in the sequence of the coded value;

S323', correcting the coded value ABS_search and obtaining reference coded value ABS_ref.

6. The tire self-positioning method according to claim 3, **characterized in that**, steps S323' comprises:

S3231', calculating time interval $\Delta T$ between ABS_search and ABS_ref = index time T3/ and take a remainder of the second signal's period ABS_period;

S3232', calculating difference $\Delta ABS$ between ABS_ref_and ABS_search = $(\Delta T / \text{ABS\_period})*(ABS[n-m] - ABS[n-m-l])$;

S3233', correcting reference coded value at the corresponding reference point and obtaining the reference coded value ABS_ref = ABS[n-m] - $\Delta ABS$.

7. The tire self-positioning method according to claim 3, **characterized in that**, the backtracking time T2 is a set fixed value, or a specific value calculated by a specific algorithm.

8. A tire self-positioning system, performing the tire self-positioning method according to claim 1, **characterized in that**, the tire self-positioning system comprises:

a tire;
a tire condition detection device, provided on the tire, configured to collect the first signal and pressure, temperature and identification code of the tire, and generating the wireless signal;
a second signal sensor, provided on the tire and configured to collect the second signal;
a second signal controller, electrically connected to the second signal sensor, the second signal controller receiving the second signal and generating a wired signal, wherein the wired signal includes a coded value corresponding to the second signal and position information of the tire where the second signal sensor is located;
a communication bus and a signal receiving processor, the signal receiving processor receiving the wired signal through the communication bus, the signal receiving processor receiving the wireless signal, the signal receiving processor performing steps S3 to S6 according to the wireless signal and the wired signal.

9. The tire self-positioning system according to claim 8, **characterized in that**,

the signal receiving processor records the time interval T1 of the currently received wireless signal and wired signal;
the signal receiving processor obtains the backtracking time T2 from the corresponding time when the first signal arriving at the reference point to receiving the wireless signal;
the signal receiving processor calculates index time T3=backtracking time T2-time interval T1.

10. The tire self-positioning system according to claim 9, **characterized in that**, the wireless signal includes the backtracking time T2.

11. The tire self-positioning system according to claim 9, **characterized in that**, the backtracking time T2 is calculated by the tire condition detection device and the signal receiving processor through the same specific algorithm to obtain a specific value.

12. The tire self-positioning system according to claim 11, **characterized in that**, the specific value is calculated based on the pressure, temperature or identification number of the tire.

Data acquisition, periodically obtaining a first signal and a second signal of a tire, the first signal and the second signal changing periodically, the first signal at least comprising acceleration information of the tire, and the second signal at least comprising rotation angle information of the tire ⟋ S1

Data transmission, obtaining a wireless signal and a wired signal of the tire, wherein the wireless signal can be indexed to corresponding time when tie first signal arrives at a reference point, and the wired signal comprises the second signal and corresponding position information of the tire ⟋ S2

Comprise: S31 calculation index time, the index time being a span from a current time that the wired signal is received to a time that the first signal arrives at the reference point; and S32 calculating, according to the index time, reference rotation angle information of the first signal arriving at the reference point, and recording the reference rotation angle information as a reference coded value ⟋ S3

Repeatedly executing steps S1-S3 to obtain a sequence of the reference rotation angle information ⟋ S4

Data statistics, performing deviation degree statistics on obtained sequence of the reference rotation angle information ⟋ S5

Determine, according to a statistical result, position information of the tire corresponding to the first signal ⟋ S6

# FIG. 1

recording a time interval T1 of the currently received wireless signal and wired signal; — S311

obtaining a backtracking time T2 from the corresponding time when the first signal arrives at the reference point to receiving the wireless signal; — S312

S313, index time T3 = backtracking time T2 - time interval T1. — S313

# FIG. 2

300

# FIG. 3

90 degree

Y

ABS_CODE_MIN+3

ABS_CODE_MIN+2

ABS_CODE_MIN+1

180 degree

ABS_CODE_MIN

0 degree

X

ABS_CODE_MAX

ABS CODE MAX-1

ABS_CODE_MAX-2

ABS_CODE_MAX-3

270 degree

## FIG. 4

Tire rotates once

ABS_CODE_MAX

ABS_CODE_MIN

## FIG. 5

FIG. 6

FIG. 7

FIG. 8

FIG. 9

**EP 4 389 467 A1**

## INTERNATIONAL SEARCH REPORT

| International application No. |
| --- |
| **PCT/CN2022/083070** |

### A. CLASSIFICATION OF SUBJECT MATTER

B60C 23/04(2006.01)i

According to International Patent Classification (IPC) or to both national classification and IPC

### B. FIELDS SEARCHED

Minimum documentation searched (classification system followed by classification symbols)

B60C

Documentation searched other than minimum documentation to the extent that such documents are included in the fields searched

Electronic data base consulted during the international search (name of data base and, where practicable, search terms used)

CNTXT, CNKI, DWPI, VEN: 轮胎, 定位, 数据, 采集, 转换, 索引, 编码, 偏离, tyre, location, data, collect, transform, index, code, deviate

### C. DOCUMENTS CONSIDERED TO BE RELEVANT

| Category* | Citation of document, with indication, where appropriate, of the relevant passages | Relevant to claim No. |
| --- | --- | --- |
| PX | CN 113561712 A (BAOLONG HUOFU (SHANGHAI) ELECTRONICS CO., LTD.) 29 October 2021 (2021-10-29)<br>description, specific embodiments, and figures 1-9 | 1-12 |
| X | CN 108909378 A (NINGBO SENASIC ELECTRONIC TECHNOLOGY CO., LTD.) 30 November 2018 (2018-11-30)<br>description, specific embodiments, and figure 1 | 1, 8 |
| A | CN 106068193 A (CONTINENTAL AUTOMOTIVE FRANCE; CONTINENTAL AUTOMOTIVE GMBH) 02 November 2016 (2016-11-02)<br>entire document | 1-12 |
| A | CN 113022235 A (AUTEL INTELLIGENT TECHNOLOGY CORP., LTD.) 25 June 2021 (2021-06-25)<br>entire document | 1-12 |
| A | EP 0547364 A2 (BRIDGESTONE CORP.) 23 June 1993 (1993-06-23)<br>entire document | 1-12 |
| A | JP 2012111481 A (TRW AUTOMOTIVE US L.L.C.) 14 June 2012 (2012-06-14)<br>entire document | 1-12 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 June 2022** | **29 June 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/083070**

| Patent document cited in search report | | | Publication date (day/month/year) | Patent family member(s) | | | Publication date (day/month/year) |
|---|---|---|---|---|---|---|---|
| CN | 113561712 | A | 29 October 2021 | | None | | |
| CN | 108909378 | A | 30 November 2018 | | None | | |
| CN | 106068193 | A | 02 November 2016 | FR | 3018649 | A1 | 18 September 2015 |
| | | | | WO | 2015135660 | A1 | 17 September 2015 |
| | | | | US | 2017001485 | A1 | 05 January 2017 |
| CN | 113022235 | A | 25 June 2021 | | None | | |
| EP | 0547364 | A2 | 23 June 1993 | KR | 930013721 | A | 22 July 1993 |
| | | | | CA | 2085562 | A1 | 17 June 1993 |
| | | | | JP | H05264407 | A | 12 October 1993 |
| | | | | US | 5249460 | A | 05 October 1993 |
| JP | 2012111481 | A | 14 June 2012 | CN | 102452282 | A | 16 May 2012 |
| | | | | EP | 2450202 | A1 | 09 May 2012 |
| | | | | JP | 2015037941 | A | 26 February 2015 |
| | | | | US | 2012112899 | A1 | 10 May 2012 |
| | | | | KR | 20120048519 | A | 15 May 2012 |

Form PCT/ISA/210 (patent family annex) (January 2015)